# EUROPEAN PATENT APPLICATION

(11) **EP 2 876 545 A1**
(43) Date of publication of application: **27.05.2015**
(21) Application number: 12881426.6
(22) Date of filing: 20.07.2012
(51) Int. Cl.: G06F 3/14, G06F 3/048, H04N 5/225

(54) **IMAGE GENERATION METHOD**

(71) Applicant: Wu, Feng-Chia, Taipei City, Taiwan 100 (TW)
(72) Inventor: Wu, Feng-Chia, Taipei City, Taiwan 100 (TW)
(74) Representative: Nederlandsch Octrooibureau
(86) International application number: PCT/CN2012/078920
(87) International publication number: WO 2014/012242

(57) **Abstract**

An image generating method includes the following steps. A scene is filmed while a single-colored image and a first image are alternatively displayed as a background of the scene. A filmed result is processed to obtain a second image using the single-colored image as the background. A portion of the second image on which the single-colored image is located is replaced by the first image to generate a third image.

## Description

### BACKGROUND

### Field of Invention

The present disclosure relates to an image generating method. More particularly, the present disclosure relates to an image generating method in which a single-colored image portion of an image is replaced.

### Description of Related Art

With the popularity of computers, various products or services related to images, text, video or voice are implemented with information technologies, and are further digitized and integrated for applications. Therefore, more and more people will utilize digital contents to assist their lectures, meetings, teachings and other activities.

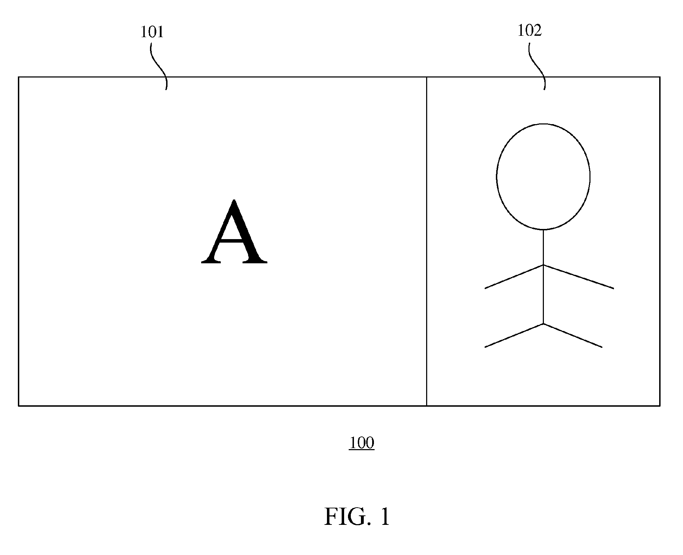

During the proceeding of most activities, a live broadcasting or a delayed broadcasting is required for presenting the progress of the activities to the participants. Reference is made to FIG. 1, which is a schematic diagram of a video generated by filming an activity with a digital content in the prior art. In the prior art, a digital content 101 and a speaker 102 are often placed in two separate blocks of a video frame 100. However, in the video filmed in this manner, the speaker 102 cannot directly post his/her gestures on the corresponding blocks to the digital content 101, such that the filmed video cannot provide live experience to the participants.

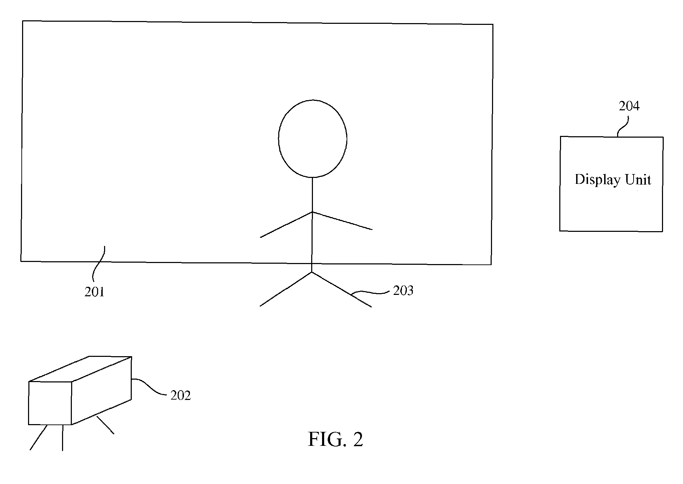

Reference is made to FIG. 2, which is a schematic diagram showing a filmed scene in which an activity with a digital content is held in the prior art. In this filming manner, a speaker 203 is arranged in front of a single-colored screen 201 so as to be filmed by a video camera 202. Then, the digital content will be synthesized into the video corresponding to the block on the single-colored screen 201. In order to allow the speaker 203 to know the corresponding position of the digital content, a display unit 204 is generally required to be disposed at the filmed scene, such that the speaker 203 may view the synthesized video instantly. Nevertheless, the digital content is displayed on the display unit 204 rather than on the single-colored screen 201, thus causing the eyes of the speaker 203 to focus on the display unit 204 aside. Hence, the participants viewing the video will feel that the speaker's eye expression is unnatural. In addition, if the speaker 203 needs to interact with the objects (such as characters or roles) in the synthesized video, the filming manner will cause the interaction between the speaker 203 and the objects in the synthesized video to be inaccurate and thus confine the performance space of the speaker 203.

### SUMMARY

Therefore, one aspect of the disclosure provides an image generating method for performing filming by using the single-colored image and the first image alternatively displayed as a background, thereby obtaining a second image using the single-colored image as the background, and then replacing a portion of the second image on which the single-colored image is located with the first image. The image generating method comprises the following steps: (a) alternatively displaying a single-colored image and a first image; (b) performing filming and image processing by using the single-colored image and the first image alternatively displayed as a background, thereby obtaining a second image using the single-colored image as the background; (c) replacing a portion of the second image on which the single-colored image is located with the first image, thereby generating a third image.

Applications of the present disclosure have the following advantages. A speaker can directly look at an image displayed on a predetermined background display position without needing to focus his/her eyes on an additional display unit aside. Accordingly, the speaker has a natural eye expression in a filmed image. In particular, in one embodiment of the present disclosure, if the speaker needs to interact with an image displayed on a display position (for example, writes text on the image, draws pictures and interacts with objects in the images, etc.), applications of the present disclosure can allow the speaker to directly interact with or mark the content in the image, and provides the speaker with more accurate manipulation of interaction. Furthermore, the digital content of the image generated can have a better display effect without being affected by the filming environment factors.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
FIG. 1 is a schematic diagram of a video generated by filming an activity with a digital content in the prior art;
FIG. 2 is a schematic diagram showing a filmed scene in which an activity with a digital content is held in the prior art;
FIG. 3 is a flow chart of an image generating method according to one embodiment of this disclosure;
FIG. 4 is a schematic diagram of a scene in which the image generating method shown in FIG. 3 is applied;
FIG. 5A is an embodiment of a single-colored image;
FIG. 5B is an embodiment of a first image;
FIG. 6A is an embodiment of a second image using a single-colored image as a background; and
FIG. 6B is an embodiment of a third image generated by replacing a portion of the second image on which the single-colored image is located with the first image.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

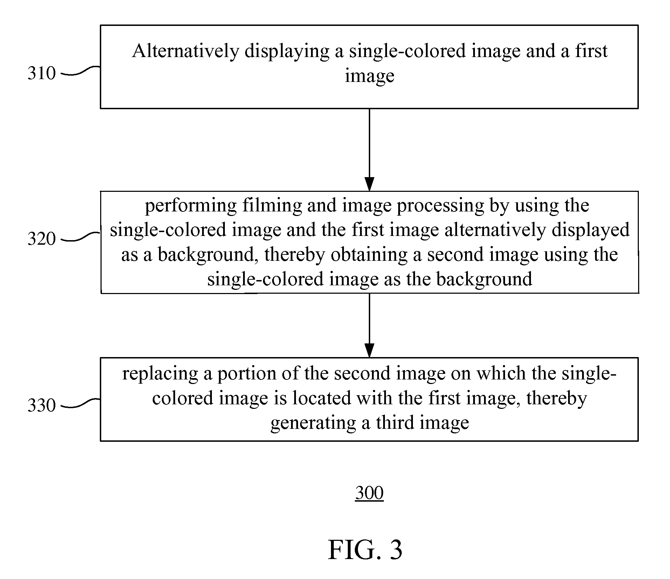

FIG. 3 is a flow chart of an image generating method according to one embodiment of this disclosure. In the image generating method, a scene is filmed while a single-colored image and a first image are alternatively displayed and used as a background of the scene, and a filmed result is accordingly processed to obtain a second image using the single-colored image as the background, and then a portion of the second image on which the single-colored image is located is replaced by the first image. The image generating method can be implemented as a computer program, and stored in a computer readable recording medium, a computer can read the medium whereby execute the image generating method. The computer readable medium can be read-only memory, flash memory, floppy disk, hard disk, CD, flash drive, tape and internet accessible database or the computer readable medium having the same functionality which can be easily thought of by those skilled in the art.

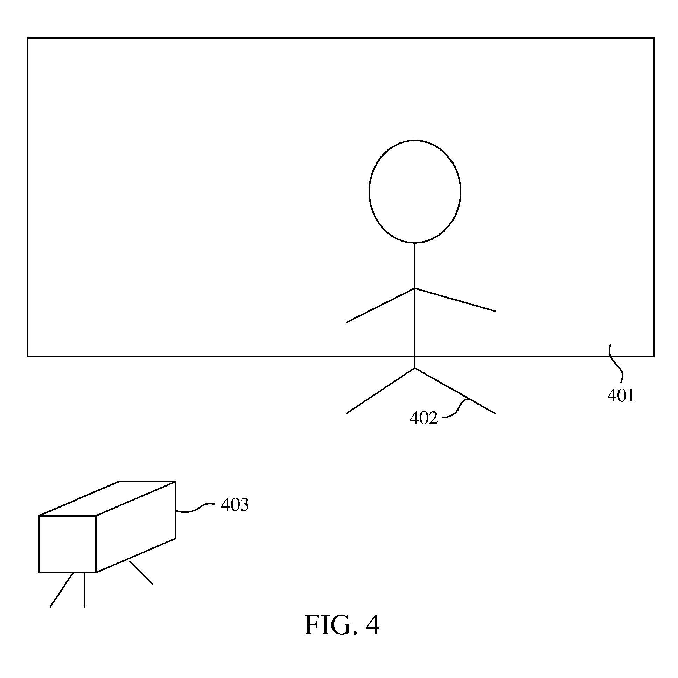

FIG. 4 is a schematic diagram of a scene in which the image generating method shown in FIG. 3 is applied. Referring to FIG. 3 and FIG. 4, the image generating method 300 comprises the following steps:

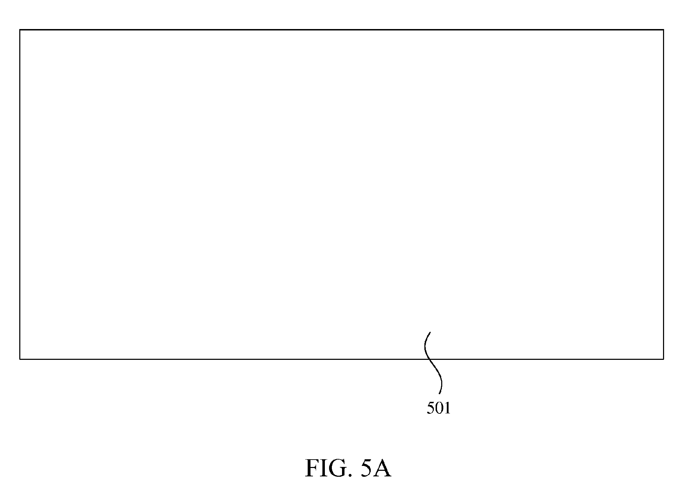

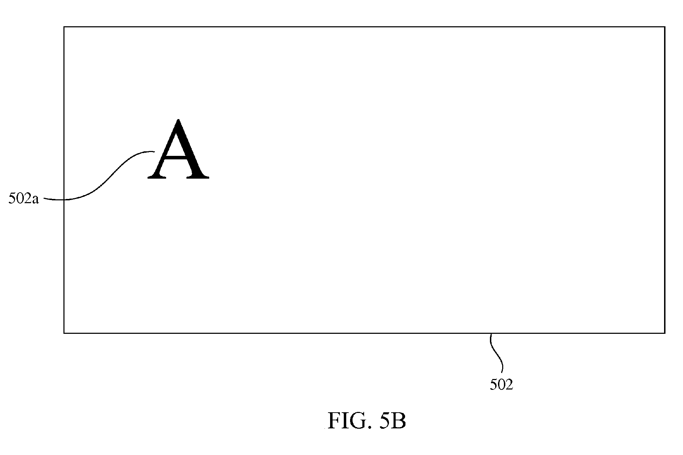

In step 310, a single-colored image and a first image are alternatively displayed at a predetermined background display position 401. Step 310 can be performed by optical code-division multiple access (OCDMA), time division multiple access (TDMA), frequency division multiple access (FDMA), or space division multiple access (SDMA), etc. Reference is made to FIG. 5A, which is an embodiment of a single-colored image. A single-colored image 501 can be green, blue, transparent or another image of one single color. In another embodiment of the present disclosure, the single-colored image may include a plurality of single-colored image blocks. In yet another embodiment of the present disclosure, a display of single-colored image can be obtained without displaying any image, but instead, a single-colored background is shown at the position that is originally for displaying the single-colored image and the first image. However, in other embodiments of the present disclosure, other manners also can be used to display a single-colored image, and thus the present disclosure is not limited thereto. Reference is made to FIG. 5B, which is an embodiment of a first image. A first image 502 may include at least one text 502a. Hence, in an embodiment of the step 310, the single-colored image 501 and the first image 502 can be alternatively displayed on the predetermined background display position 401. In other embodiments, the first image may include at least one text, one picture, one video or other types of digital content or combinations thereof, and the present disclosure is not limited thereto. Furthermore, in an embodiment of the step 310, a display unit (such as a cathode ray tube, a liquid crystal display, or other types of display unit) can be disposed at the predetermined background display position 401, and thus the single-colored image and the first image can be alternatively displayed on the display unit. In an embodiment of the step 310, a projector screen or another projection area on which images can be projected is disposed at the predetermined background display position 401, and thus the projector can alternatively project the single-colored image and the first image thereon. A short-throw projector can be used to project the images on the predetermined background display position 401. As a result, the short-throw projector can be disposed at a location closer to the predetermined background display position 401 so as to prevent the projection path from being shaded by the speaker in front of the predetermined background display position 401, thus avoiding resulting in poor projection. In other embodiments of the step 310, other display manners can be used, and the present disclosure is not limited thereto.

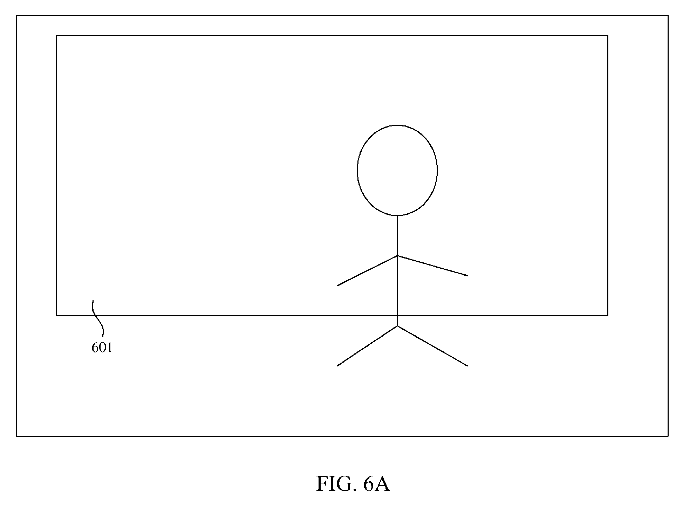

In step 320, a scene is filmed while a single-colored image and a first image are alternatively displayed on the predetermined background display position 401, and a filmed result is processed to obtain a second image using the single-colored image as the background (as shown in FIG. 6A).

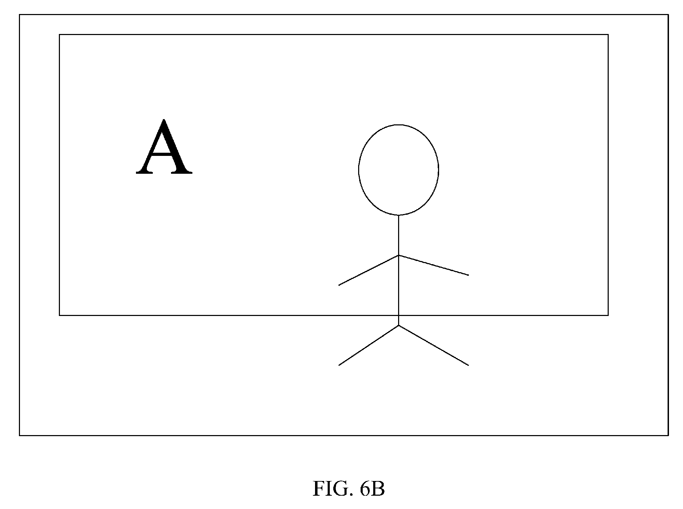

In step 330, a single-colored portion of the second image (as shown in 601 of FIG. 6A) is replaced by the first image to generate a third image (as shown in FIG. 6B). The single-colored portion of the second image can be removed by using the chroma key compositioning, and the step 330 can be achieved by keying the first image with the removed portion into the third image. Thus, while the digital content is used as the first image to be alternatively displayed on the predetermined background display position 401, the speaker 402 can directly look at the image displayed on the predetermined background display position 401, and does not need to focus his/her eyes on the additional display unit aside. As a result, the speaker 402 can have a more natural eye expression in the third image. In particular, in an embodiment of the present disclosure, if the speaker 402 needs to interact with the image displayed on the predetermined background display position 401 (for example, writes text on the image, draws pictures and interacts with the objects in the image, etc.), applications of the present disclosure allow the speaker to directly interact with or mark the content in the image, and provides the speaker with more accurate manipulation of interaction. Furthermore, the digital content used as the first image may be replaced by the third image generated in step 330. Therefore, the digital content on the third image after replacement can have a better display effect without being affected by the filming environment factors.

In an embodiment of the disclosure, in step 310, the single-colored image and the first image may be alternatively displayed on the predetermined background display position 401 according to time division multiplexing. In other words, the single-colored image and the first image can be sequentially displayed on the predetermined background display position 401. Then, in step 320, the scene can be filmed during a time frame of the time slot when the single-colored image is displayed, so as to obtain the second image using the single-colored image as the background. If a video camera 403 is used to film a scene, an active shutter can be installed on the video camera 403. Hence, within the time frame of the time slot when the first image is displayed, the active shutter can block the video camera 403 from filming; and within the time frame of the time slot when the single-colored image is displayed, the active shutter does not block the video camera 403 from filming, and allows the video camera 403 to film the second image using the single-colored image as the background.

Furthermore, the present disclosure may alternatively display the single-colored image and the first image by optical splitting. The optical splitting can include polarization division, spectrum division, color filtering, spatial multiplexing, time multiplexing, anaglyph, lenticular lens, directional backlight, parallax barrier, optical grating, optical refraction, viewpoint splitting, etc. Thus, in step 320, the scene can be filmed by using optical photography corresponding to the single-colored image displayed and using the single-colored image as the background, thus the second image using the single-colored image as the background can be obtained.

In practice, in step 310, the single-colored image and the first image can be alternatively displayed on the predetermined background display position 401 by using different optical characteristics. In other words, the single-colored image and the first image can be displayed by using different optical characteristics on the predetermined background display position 401. Then, in step 320, a filming video camera 403 is made to have the optical characteristic that can film the single-colored image display, thus the scene using the displayed single-colored image as the background can be filmed. For example, the video camera 403 can be equipped with the lenses of the optical characteristics corresponding to the single-colored image display such as the polarized lenses, spectrum lenses, color lenses, parallax barrier lenses, grating lenses or lenses of other optical characteristics. Thus, the video camera 403 can have the optical characteristic to film the single-colored image only.

Besides, in another embodiment of step 320, a fourth image is generated by performing filming using the single-colored image and the first image displayed as the background. Then, the fourth image can be filtered to extract the second image using the single-colored image as the background. For example, one can filter the fourth image to extract the image corresponding to the time frame of the time slot when the first image is displayed, and generate the second image using the single-colored image as the background.

In other embodiments of the present disclosure, in step 310, the single-colored image and the first image are alternatively displayed on the predetermined background display position according to an alternatively displaying frequency. Hence, in some embodiments of the step 320, the several first frames can be captured from the filmed image during at least one time period when the single-colored image is displayed according to the alternatively displaying frequency. Then, the captured first frames can be integrated into the second image for further processing in step 330. For example, in step 310, if the alternatively displaying frequency is 60Hz, the single-colored image may be displayed in 0 sec-1/60 sec, 2/60 sec-3/60 sec, 4/60 sec-5/60 sec, and the first image may be displayed in 1/60 sec-2/60 sec, 3/60 sec-4/60 sec, 5/60 sec-6/60 sec. Thus, the first frames can be captured from the filmed image within several time periods (0 sec-1/60 sec, 2/60 sec-3/60 sec, 4/60 sec-5/60 sec) when the single-colored image is displayed, and thereby the first frames are integrated into the second image. The filming frequency in step 320 can be an integral multiple of the alternatively displaying frequency in step 310. In the embodiment, the filming frequency can be 120Hz (i.e. twice of the alternatively displaying frequency 60Hz) for capturing the first frames in step 320. In addition, the execution of step 310 and step 320 can be synchronized via a wired or wireless data transmission communication protocol, in which the wired or wireless data transmission communication protocol can be a digital light processing (DLP LINK) protocol, a radio frequency (RF) protocol, a bluetooth protocol or an infrared (IR) protocol.

In still other embodiments of the step 320, several single-colored background frames can be selected from the several filmed frames of the filmed image, and further integrated into the second image.

In yet another embodiment of the present disclosure, a preset mark can be displayed on the displayed single-colored image in step 310. The displayed preset mark can be at least one preset text, image, single-colored image or another type of mark. Thus, the step 320 can include the following steps. The several marked frames having the preset marks are selected from the several filmed frames of filmed images. In other words, the frames having the preset marks can be captured by detecting individually whether the filmed frames of the filmed images have the preset marks or not. Furthermore, in some embodiments of the present disclosure, in step 310, the preset marks on a preset region of the single-colored image can be displayed, which can be detected in step 320, thus the frames having preset marks can be captured. Then, the marked frames are integrated into the second image. Thus, the image using single-colored image as the background can still be captured without specifically setting or adjusting the alternatively displaying frequency in step 310 or the filming frequency in step 320.

Moreover, the image generating method may further include the following steps. An interactive instruction is detected during filming the scene. Then, according to the interactive instruction, the alternatively displayed first image is instantly modified in step 310. Thus, in an application scene of the present disclosure, the contents presented in the first image can be instantly modified, and thereby the speaker 402 can make the content of speech more flexible without being limited to the content of the first image.

From the above-described embodiments of the present disclosure, application of the present disclosure has the following advantages. A speaker can directly look at the image displayed on the predetermined background display position and does not need to focus his/her eyes on the additional display unit aside. Accordingly, the speaker has a more natural eye expression in a filmed image. In particular, in one embodiment of the present disclosure, if the speaker needs to interact with the images displayed on a display position (e.g. writes text on the image, draws pictures and interacts with the objects in the image, etc.), applications of the present disclosure can allow the speaker to directly interact with or mark the content in the image, and provides speakers with more accurate manipulation of interaction. Furthermore, the digital content of the image generated can have a better display effect without being affected by the filming environment factors.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. An image generating method, **characterized by** comprising:
(a) alternatively displaying a single-colored image (501) and a first image (502);
(b) performing filming and image processing by using the single-colored image (501) and the first image (502) alternatively displayed as a background, thereby obtaining a second image using the single-colored image (501) as the background; and
(c) replacing a portion of the second image on which the single-colored image (501) is located with the first image (502), thereby generating a third image.

2. The image generating method of claim 1, **characterized in that** the step (a) comprises:
alternatively displaying the single-colored image (501) and the first image (502) according to time sequence division.

3. The image generating method of claim 2, **characterized in that** the step (b) comprises:
performing filming by using the single-colored image (501) as the background during a time period when the single-colored image (501) is displayed, thereby obtaining the second image using the single-colored image (501) as the background.

4. The image generating method of claim 1, **characterized in that** the step (a) comprises:
alternatively displaying the single-colored image (501) and the first image (502) by optical splitting.

5. The image generating method of claim 4, **characterized in that** the step (b) comprises:
performing filming by using optical photography corresponding to the single-colored image (501) displayed and using the single-colored image (501) as the background , thereby obtaining the second image using the single-colored image (501) as the background.

6. The image generating method of claim 4, **characterized in that** the optical splitting comprises polarization division, spectrum division, color filtering, spatial multiplexing, time multiplexing, anaglyph, lenticular lens, directional backlight, parallax barrier, optical grating, optical refraction or viewpoint splitting.

7. The image generating method of claim 1, **characterized in that** the step (b) comprises:
generating a fourth image by performing filming using the single-colored image (501) and the first image (502) displayed as the background; and
filtering the fourth image to extract the second image using the single-colored image (501) as the background.

8. The image generating method of claim 1, **characterized in that** the step (a) comprises:
alternatively displaying the single-colored image (501) and the first image (502) on a display unit.

9. The image generating method of claim 1, **characterized in that** the step (a) comprises:
alternatively projecting the single-colored image (501) and the first image (502) on a projection area.

10. The image generating method of claim 1, further **characterized by** comprising:
detecting an interactive instruction during performing filming; and
instantly modifying the first image (502) according to the interactive instruction.

11. The image generating method of claim 1, **characterized in that** the step (b) comprises:
(b1) performing filming by using the single-colored image (501) and the first image (502) alternatively displayed as the background, thereby obtaining a filmed image; and
(b2) extracting the second image using the single-colored image (501) as the background from the filmed image.

12. The image generating method of claim 11, **characterized in that** step (a) is performed according to an alternatively displaying frequency, and step (b2) comprises:
capturing a plurality of first frames from the filmed image during at least one time period when the single-colored image (501) is displayed according to the alternatively displaying frequency; and
integrating the first frames into the second image.

13. The image generating method of claim 12, **characterized in that** the step (b1) is performed by using a filming frequency to capture the filmed image, and the filming frequency is an integral multiple of the alternatively displaying frequency.

14. The image generating method of claim 12, further **characterized by** comprising:
synchronizing the execution of the step (a) and the step (b1).

15. The image generating method of claim 14, **characterized in that** the step (a) and the step (b1) are synchronized via a wired or wireless data transmission communication protocol.

16. The image generating method of claim 14, **characterized in that** the step (a) and the step (b1) are synchronized via a digital light processing (DLP LINK) protocol, a radio frequency (RF) protocol, a bluetooth protocol or an infrared (IR) protocol.

17. The image generating method of claim 11, **characterized in that** the filmed image comprises a plurality of filmed frames, and the step (b2) comprises:
selecting a plurality of single-colored background frames from the filmed frames; and
integrating the single-colored background frames into the second image.

18. The image generating method of claim 11, **characterized in that** the filmed image comprises a plurality of filmed frames, and the step (a) comprises displaying a preset mark on the single-colored image (501); and the step (b2) comprises:
selecting a plurality of marked frames having the preset marks from the filmed frames; and
integrating the marked frames into the second image.

19. The image generating method of claim 18, **characterized in that**:
the step (a) is configured to display the preset marks on a preset region of the single-colored image (501); and
the step (b2) comprises selecting a plurality of marked frames, having the preset marks on the preset region, from the filmed frames.
